# FASCICULE DE BREVET EUROPEEN

(11) **EP 2 956 702 B1**
(45) Date de publication et mention de la délivrance du brevet: **08.04.2020**
(21) Numéro de dépôt: 14706909.0
(22) Date de dépôt: 10.02.2014
(51) Int. Cl.: F16L 37/10, F16L 37/107, F16L 37/18, F16L 37/20

(54) **RACCORD MANUEL POUR RACCORDER DEUX CONDUITS DE FLUIDE**
MANUELLE VERBINDUNG ZUM VERBINDEN ZWEIER FLUIDLEITUNGEN
MANUAL CONNECTION FOR CONNECTING TWO FLUID CONDUITS

(30) Priorité: 12.02.2013 FR 1351165
(43) Date de publication de la demande: 23.12.2015
(73) Titulaire: Boccard, 69100 Villeurbanne (FR)
(72) Inventeur: ACQUISTAPACE, Bruno, F-74910 Seyssel (FR); VANSTON, Jason, F-69600 Oullins (FR); BOCCARD, Patrick, F-69100 Villeurbanne (FR)
(74) Mandataire: Chevalier, Renaud Philippe
(86) Numéro de dépôt international: PCT/FR2014/050250
(87) Numéro de publication internationale: WO 2014/125199

(56) Documents cités:
- EP-A1- 0 813 016
- FR-A- 1 602 038
- FR-A1- 3 002 021
- US-A- 2 951 717

## Description

La présente invention concerne un raccord manuel pour raccorder entre eux deux conduits destinés à conduire du fluide, tel qu'un liquide sous pression.

La présente invention peut s'appliquer à tout domaine industriel nécessitant un raccordement manuel, avec ouverture et fermeture répétées, pour des transferts de fluides. En particulier, la présente invention peut s'appliquer à des circuits démontables tels que des tuyaux flexibles ou des tableaux de pontage. En particulier, la présente invention peut s'appliquer aux domaines des liquides agroalimentaires, cosmétiques, biologiques et à la chimie fine.

US3860274A ou US6290267A divulgue un raccord manuel très répandu qui a un élément mâle avec deux parties de retenue et un élément femelle recevant le premier élément de raccord. Le deuxième élément de raccord comporte deux cames disposées dans le deuxième élément de raccord et déplaçables en rotation entre une position de serrage, où elles coopèrent avec les parties de retenue, et une position de desserrage, où elles libèrent les parties de retenue. Le raccord manuel de US3860274A ou US6290267A comprend deux organes de préhension, en forme de leviers, qui sont configurés pour déplacer respectivement et indépendamment les cames de serrage entre la position de serrage et la position de desserrage. Lorsqu'un opérateur actionne l'un des organes de préhension, la came de serrage correspondante tourne autour d'une direction de rotation qui est tangentielle à l'élément femelle, donc à sa section de passage de fluide.

Cependant, l'agencement des cames de serrage impose à l'opérateur de réaliser au moins deux manœuvres successives pour serrer le raccord manuel de US3860274A ou US6290267A. En effet, l'opérateur doit tourner un organe de préhension pour serrer une came de serrage, puis il doit tourner l'autre organe de préhension pour serrer l'autre came de serrage. Donc, le raccord manuel de US3860274A ou US6290267A induit des raccordements manuels relativement longs, ce qui ralentit la production industrielle, en particulier dans le cas où les raccord manuels à manœuvrer sont nombreux comme pour un tableau de pontage.

Le document US 2 951 717 A1 divulgue un raccord selon le préambule de la revendication 1.

La présente invention vise à résoudre le problème de verrouillage du raccord manuel.

À cet effet, l'invention a pour objet un raccord manuel, pour raccorder deux conduits destinés à conduire du fluide, tel que défini dans la revendication 1.

Ainsi, un tel raccord manuel permet un raccordement rapide des conduits par un opérateur avec une seule main et sans outil. En effet, l'organe de préhension permet à l'opérateur de faire tourner les deux organes de serrage simultanément et en un seul geste. Lorsque chaque organe de serrage comprime une partie de retenue respective, le premier élément de raccord est plaqué contre le deuxième élément de raccord, ce qui permet de réaliser une étanchéité entre eux. Ainsi, comme le raccordement du premier élément de raccord et du deuxième élément de raccord est étanche en position de serrage, le fluide peut s'écouler dans les conduits et à travers le raccord manuel sans risque de fuite.

Dans la présente demande, le terme « lier » et ses dérivés désignent une liaison cinématique, directe ou indirecte, entre deux pièces. Une telle liaison cinématique peut se faire par l'intermédiaire d'aucun, d'un ou de plusieurs composant(s).

Dans la présente demande, les verbes « raccorder », « connecter », « alimenter » et leurs dérivés se rapportent à la mise en communication de fluide d'au moins deux volumes distants entre eux, pour permettre un écoulement de fluide entre ces deux volumes distants. Cet écoulement de fluide peut se faire par l'intermédiaire d'aucun, d'un ou de plusieurs composant(s).

En particulier, le raccord manuel objet de la présente invention peut être utilisé pour raccorder rapidement deux conduits destinés à conduire du liquide, c'est-à-dire tout produit comprenant une phase liquide et pouvant s'écouler dans un conduit hydraulique, comme un liquide, un mélange de plusieurs liquides, un mélange de liquide et de gaz ou un mélange de liquide et de particules solides également connu sous la dénomination anglaise de « slurry ».

Dans la présente demande, le terme « libérer » et ses dérivés désignent la possibilité pour l'opérateur de dégager le premier élément de raccord hors du deuxième élément de raccord.

Selon une variante de l'invention, chaque direction de rotation est sécante à une section de passage du fluide définie par le deuxième élément de raccord. Ainsi, l'organe de préhension peut présenter une structure simple et compacte. Par exemple, dans le cas où le deuxième élément de raccord définit une section de passage cylindrique à base circulaire, chaque direction de rotation peut être colinéaire à un diamètre de cette base circulaire.

Selon une variante de l'invention, les organes de serrage sont situés respectivement sur deux côtés du deuxième élément de raccord qui sont opposés par rapport à la direction longitudinale. Par exemple, dans le cas où le deuxième élément de raccord définit une section de passage cylindrique à base circulaire, les organes de serrage sont diamétralement opposés.

Selon un mode de réalisation de l'invention, chaque partie de retenue est formée par un épaulement respectif disposé en saillie externe sur le premier élément de raccord.

Ainsi, de tels épaulements permettent de réaliser simplement les parties de retenue, chaque épaulement définissant une surface orientée parallèlement à la direction longitudinale et que peut comprimer un organe de serrage respectif.

Dans la présente demande, le terme « interne » qualifie une surface orientée vers le passage du fluide dans le premier élément de raccord, tandis que le terme « externe » qualifie une surface tournée dans le sens opposé.

Selon une variante de l'invention de ce mode de réalisation, chaque épaulement est disposé en saillie externe sur une portion proximale du premier élément de raccord. Ainsi, dès que l'opérateur introduit le premier élément de raccord dans le deuxième élément de raccord, les épaulements atteignent l'emplacement qu'ils occupent lorsque les organes de serrage sont en position de serrage.

Dans la présente demande, une portion du premier élément de raccord est qualifiée de « proximale » lorsqu'elle est proche du deuxième élément de raccord en position de serrage. De même, une portion du deuxième élément de raccord est qualifiée de « proximale » lorsqu'elle est proche du premier élément de raccord en position de serrage. Inversement, une portion du premier élément de raccord est qualifiée de « distale » lorsqu'elle est loin du deuxième élément de raccord en position de serrage, et une portion du deuxième élément de raccord est qualifiée de « distale » lorsqu'elle est loin du premier élément de raccord en position de serrage.

Selon un mode de réalisation de l'invention, le premier élément de raccord présente sur sa surface externe au moins deux portions d'introduction définissant une dimension transversale, mesurée orthogonalement à la direction longitudinale, qui est inférieure à la distance séparant les deux organes de serrage, de sorte que le deuxième élément de raccord peut être déplacé en pivotement autour de la direction longitudinale entre :
- une position d'introduction, dans laquelle les portions d'introduction peuvent coulisser entre les organes de serrage de façon à introduire le premier élément de raccord dans le deuxième élément de raccord en translation suivant la direction longitudinale ; et
- une position de retenue, dans laquelle les parties de retenue sont en butée respectivement contre les organes de serrage de façon à retenir le premier élément de raccord dans le deuxième élément de raccord.

En d'autres termes, le premier élément de raccord suit une trajectoire similaire à celle d'une baïonnette lorsque l'opérateur l'introduit dans le deuxième élément de raccord puis le place en position de retenue. Ainsi, contrairement au raccord manuel de US3860274A ou US6290267A, le premier élément de raccord peut être retenu ou accroché dans le deuxième élément de raccord, lorsque les organes de serrage sont en position de desserrage, ce qui évite, en cas de desserrage inopiné, un éclatement et une fuite majeure du raccord manuel sous l'effet de la pression du fluide. En effet, en position de retenue, il n'y a qu'un petit jeu entre le premier élément de raccord et le deuxième élément de raccord, donc un petit débit de fuite en cas d'incident.

Selon une variante de l'invention, chaque partie de retenue est solidaire du premier élément de raccord, par exemple de manière monobloc avec le premier élément de raccord. Ainsi, les parties de retenue peuvent supporter de grands efforts de serrage et leur fabrication peut être simple lorsqu'elles sont venues de matière avec le premier élément de raccord.

Selon une variante de l'invention, le deuxième élément de raccord comprend un boîtier et un embout solidarisé au boîtier, l'embout étant placé dans le boîtier et définissant une surface interne configurée pour canaliser le fluide. Ainsi, le boîtier peut recevoir tout ou partie du premier élément de raccord. Avantageusement, l'embout est placé dans le boîtier.

Cette construction permet de protéger la région de raccordement entre le premier élément de raccord et le deuxième élément de raccord, notamment un joint d'étanchéité, contre les agressions externes mécaniques (chocs) ou chimiques (corrosion).Selon un mode de réalisation de l'invention, le premier élément de raccord présente une collerette, de préférence située sur une portion proximale du premier élément de raccord, le contour de la collerette définissant les parties de retenue, les portions d'introduction étant ménagées dans la collerette.

Ainsi, le pourtour d'une telle collerette définit une pluralité de parties de retenue, ce qui permet à l'opérateur de placer aisément les parties de retenue en contact avec les organes de serrage sur une grande plage angulaire autour de la direction longitudinale.

Selon l'invention, chaque organe de serrage comprend une came excentrique à profil extérieur curviligne, de préférence convexe.

Ainsi, de telles cames excentriques permettent d'exercer de grands efforts de serrage pour un petit mouvement de rotation, ce qui rend très rapide le déplacement de la position de desserrage à la position de serrage.

Selon une variante de l'invention, les cames excentriques sont disposées dans le deuxième élément de raccord, de préférence sur une surface intérieure dudit boîtier. Ainsi, les cames excentriques peuvent être déplacées sans risque d'interférence ou de collision avec un objet externe au raccord manuel.

Selon une variante de l'invention, chaque organe de serrage comprend deux bielles agencées de sorte qu'une rotation des moyens de manipulation induise une rotation démultipliée de chaque organe de serrage.

Selon un mode de réalisation de l'invention, les directions de rotation des deux organes de serrage sont parallèles, de préférence colinéaires, et les organes de serrage sont agencés pour tourner dans le même sens de rotation.

Ainsi, de telles directions de rotation colinéaires simplifient la construction du raccord manuel, en particulier de l'organe de préhension et de ses liaisons mécaniques aux organes de serrage.

Selon un mode de réalisation de l'invention, le premier élément de raccord et le deuxième élément de raccord définissent, en position de serrage, un canal ayant globalement la forme d'un cylindre, de préférence à base circulaire, la direction longitudinale étant colinéaire à l'axe dudit cylindre.

Ainsi, un tel canal de passage forme un raccord manuel très hygiénique, car il évite les décollements, donc les rétentions, du fluide.

Selon un mode de réalisation de l'invention, les moyens de manipulation comprennent deux leviers agencés pour pivoter respectivement autour des directions de rotation, les leviers étant liés, de préférence de manière fixe, à l'organe de préhension.

Ainsi, de tels leviers procurent un bras de levier à l'opérateur, ce qui limite l'effort manuel pour serrer le raccord manuel.

Selon un mode de réalisation de l'invention, le raccord manuel comprend en outre un joint d'étanchéité élastiquement déformable, agencé de façon à réaliser un raccordement étanche entre une première portée de joint définie par le premier élément de raccord et une deuxième portée de joint définie par le deuxième élément de raccord, le joint d'étanchéité, les organes de serrage et les première et deuxième portées de joints étant configurés de sorte que le joint d'étanchéité affleure les surfaces mouillées du premier élément de raccord et du deuxième élément de raccord lorsque chaque organe de serrage est en position de serrage.

Ainsi, un tel joint d'étanchéité affleurant permet de former un raccord manuel peu salissant, donc très hygiénique, car le joint d'étanchéité ne retient pas de particules du fluide s'écoulant dans le raccord manuel.

Dans la présente demande, le terme « surface mouillée » désigne toute surface en contact avec le fluide lorsque le raccord manuel est en service. Les surfaces mouillées sont donc des surfaces internes du raccord manuel.

Selon une variante de l'invention, le joint d'étanchéité est logé partiellement dans une gorge du deuxième élément de raccord.

Selon une variante de l'invention, le joint d'étanchéité est composé d'un matériau sélectionné dans le groupe constitué d'un silicone, d'un éthylène-propylène-diène monomère (EPDM), d'un butadiène-acrylonitrile (NBR) et d'un polytétrafluoroéthylène (PTFE). Ainsi, un tel matériau est résistant aux contraintes mécaniques causées par les serrages et aux contraintes chimiques causées par le fluide.

Selon une variante de l'invention, le premier élément de raccord et le deuxième élément de raccord sont configurés pour canaliser un fluide, par exemple un liquide, sous une pression supérieure à 5 bars, par exemple égale 10 bars. Les matériaux et les dimensions des premier et deuxième éléments de raccord peuvent être sélectionnés pour résister à une telle pression du fluide. Ainsi, le raccord manuel peut résister à de fortes pressions.

Selon un mode de réalisation de l'invention, le raccord manuel comprend en outre au moins un dispositif de détection comprenant un détecteur actif, de préférence sélectionné dans le groupe constitué d'une caméra, d'un capteur magnéto-inductif, d'un capteur inductif et d'une antenne de radio-identification, le dispositif de détection comprenant en outre un élément passif, par exemple une étiquette de radio-identification, le détecteur actif étant configuré pour générer un signal lorsque chaque organe de serrage est en position de serrage.

Ainsi, un tel dispositif de détection permet de prévenir les erreurs de raccordement, en particulier dans le cas où le dispositif de détection communique avec un automate commandant l'écoulement du fluide dans les conduits.

Selon un mode de réalisation de l'invention, le détecteur actif est solidaire du premier élément de raccord et l'élément passif est porté par le deuxième élément de raccord.

Selon une variante de ce mode de réalisation, l'élément passif est une étiquette de radio-identification logée dans l'organe de préhension, et le détecteur actif est une antenne de radio-identification disposée sur le premier élément de raccord, la distance entre l'étiquette de radio-identification et l'antenne de radio-identification étant inférieure à la distance de détection lorsque l'organe de préhension, donc chaque organe, est en position de serrage.

Ainsi, un tel dispositif de détection permet de détecter de manière fiable la position de serrage. Certains dispositifs de détection, comme la technologie de radio-identification, permettent d'enregistrer des informations sur le raccord manuel, c'est-à-dire de lire et/ou d'écrire certaines informations, comme l'état sanitaire du raccord manuel (propre, sale, stérile), son état fonctionnel (non utilisé, en cours d'utilisation, en cours de nettoyage) et son historique (date de première utilisation, dernier fluide transféré, heure du précédent nettoyage) etc. Certaines informations sont invariables et ne sont destinées qu'à être lues, comme le numéro de série du raccord manuel, ses matériaux, sa date de fabrication etc. Tandis que d'autres informations sont modifiables, de manière automatique (date et heure du précédent nettoyage par exemple), ou de manière manuelle (date de remplacement du joint d'étanchéité par exemple).

Selon l'invention, le raccord manuel comprend en outre un dispositif de verrouillage agencé pour bloquer la rotation d'au moins un organe de serrage.

Ainsi, un tel dispositif de verrouillage augmente la sécurité du raccord manuel, car il évite un desserrage inopiné.

Le dispositif de verrouillage comprend une goupille et un organe élastique de rappel, la goupille étant manuellement déplaçable entre une position de verrouillage, dans laquelle la goupille pénètre partiellement dans une cavité ménagée dans un axe solidaire en rotation de l'un des organes de serrage, et une position de déverrouillage, dans laquelle la goupille est dégagée de la cavité, l'organe élastique de rappel étant agencé pour rappeler la goupille en position de verrouillage.

Selon une variante, le raccord manuel comprend en outre un membre de blocage agencé pour bloquer la rotation de l'organe de préhension. Ainsi, un tel membre de blocage augmente la sécurité du raccord manuel, car il évite un desserrage inopiné.

Selon une variante de l'invention, le premier élément de raccord et le deuxième élément de raccord sont composés d'un acier inoxydable. Ainsi, le raccord manuel est résistant à la corrosion chimique.

Les modes de réalisation et les variantes mentionnés ci-avant peuvent être pris isolément ou selon toute combinaison techniquement admissible.

La présente invention sera bien comprise et ses avantages ressortiront aussi à la lumière de la description qui va suivre, donnée uniquement à titre d'exemple non limitatif et faite en référence aux dessins annexés, dans lesquels :
- la figure 1 est une vue en perspective éclatée d'un raccord manuel conforme à un premier mode de réalisation de l'invention ;
- la figure 2 est une vue en perspective du raccord manuel de la figure 1, dans une configuration de desserrage ;
- la figure 3 est une vue en perspective du raccord manuel de la figure 1, dans une configuration de serrage ;
- la figure 4 est une coupe, suivant le plan IV à la figure 2 ;
- la figure 5 est une vue de face suivant la flèche V à la figure 4 ;
- la figure 6 est une coupe suivant le plan VI à la figure 3 ou suivant la ligne IV-IV à la figure 5 ;
- la figure 7 est une vue de face, suivant la flèche VII à la figure 6 ;
- la figure 8 est une demi-coupe suivant la ligne VIII-VIII à la figure 7 ;
- la figure 9 est une vue schématique d'une partie du raccord manuel de la figure 1, à plus grande échelle ;
- la figure 10 est une vue en perspective, du côté opposé à la figure 2, du raccord manuel de la figure 1 dans une configuration préalable au raccordement, où le premier élément de raccord et le deuxième élément de raccord sont disjoints ;
- la figure 11 est une vue similaire à la figure 10 du raccord manuel de la figure 10, lors de l'introduction du premier élément de raccord dans le deuxième élément de raccord ;
- la figure 12 est une vue en similaire à la figure 10 du raccord manuel de la figure 10 dans une configuration de retenue, dans laquelle le premier élément de raccord est retenu dans le deuxième élément de raccord ;
- la figure 13 est une vue similaire à la figure 10 du raccord manuel de la figure 10 dans une configuration intermédiaire ;
- la figure 14 est une vue similaire à la figure 10 du raccord manuel de la figure 10 dans une configuration de serrage, dans laquelle le premier élément de raccord est retenu dans le deuxième élément de raccord ; et
- la figure 15 est une vue schématique en coupe d'un raccord manuel conforme à un deuxième mode de réalisation de l'invention.

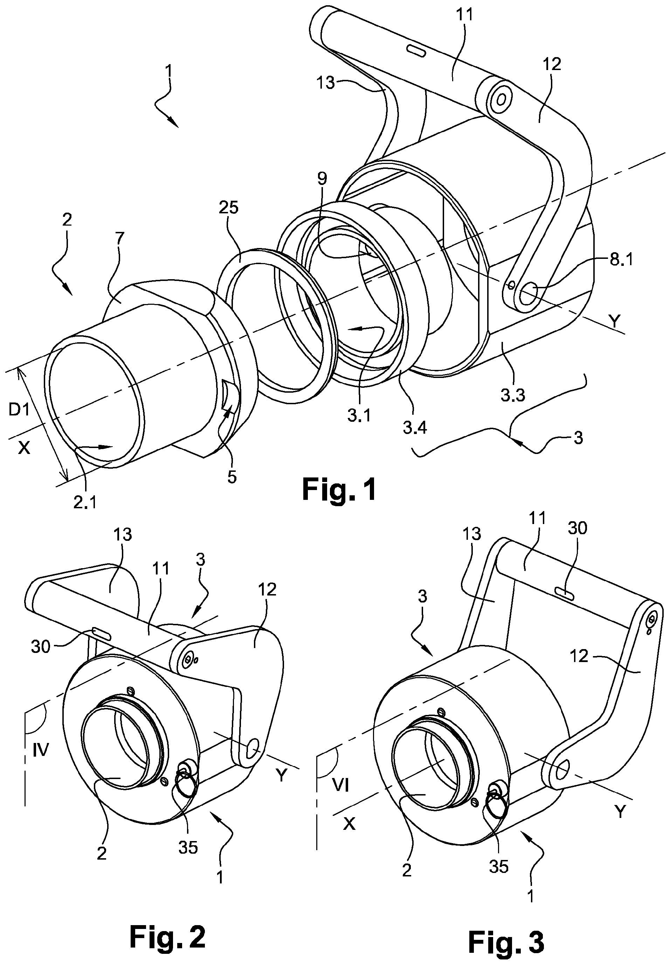

Les figures 1, 2, 3, 4, 5, 6, 7, 8 et 9 illustrent un raccord manuel 1, destiné à raccorder deux conduits non représentés de fluide. En l'occurrence, le fluide peut être un liquide sous une pression d'environ 10 bars. Le raccord manuel 1 comprend un premier élément de raccord 2 et un deuxième élément de raccord 3, qui est adapté pour recevoir le premier élément de raccord 2 suivant une direction longitudinale X. Le premier élément de raccord 2 et le deuxième élément de raccord 3 sont ici composés d'un acier inoxydable.

Dans l'exemple des figures 1 à 8, le premier élément de raccord 2 présente une surface interne 2.1 cylindrique qui a pour fonction de canaliser le liquide. De même, le deuxième élément de raccord 3 présente une surface interne 3.1 cylindrique qui a pour fonction de canaliser le liquide.

Lorsque le raccord manuel 1 est en service, c'est-à-dire en configuration de serrage, la surface interne 2.1 coïncide avec la surface interne 3.1 de sorte que le premier élément de raccord 2 et le deuxième élément de raccord 3 définissent, en configuration de serrage, un canal qui a globalement la forme d'un cylindre à base circulaire, dont l'axe est colinéaire à la direction longitudinale X.

En service, le liquide provenant d'un conduit amont est canalisé vers un conduit aval par la surface interne 2.1 et la surface interne 3.1. Le raccord manuel 1 a ici un diamètre interne D1, matérialisé à la figure 1 sur la surface interne 2.1, d'environ 50 mm.

Le deuxième élément de raccord 3 est ici composé d'un boîtier 3.3 et d'un embout 3.4 solidarisés entre eux. L'embout 3.4 est placé dans le boîtier 3.3. La surface interne 3.1 est définie par l'embout 3.4.

Le premier élément de raccord 2 comporte deux parties de retenue 5 et 6, visibles aux figures 1, 5 et 8. Chacune des parties de retenue 5 et 6 est ici formée par un épaulement respectif disposé en saillie externe sur une portion proximale 7 du premier élément de raccord 2.

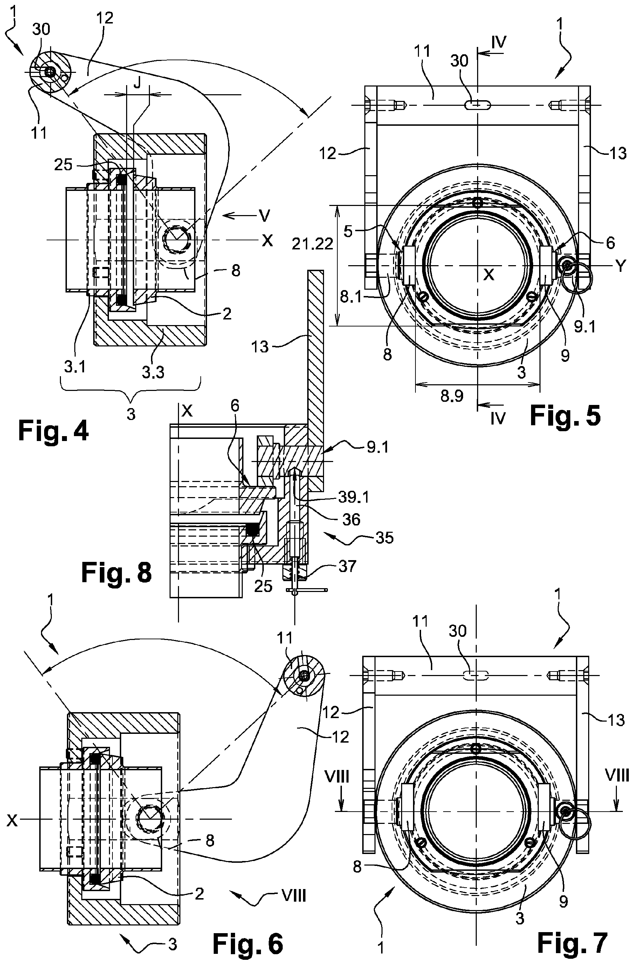

Le deuxième élément de raccord 3 comporte deux cames excentriques 8 et 9, visibles aux figures 5, 7 et 10, qui sont semblables et à profil extérieur curviligne convexe. Chacune des came excentrique 8 et 9 forme un organe de serrage configuré pour coopérer avec une partie de retenue respective 5 ou 6.

Les cames excentriques 8 et 9 sont ici situées respectivement sur deux côtés du deuxième élément de raccord 3 qui sont opposés par rapport à la direction longitudinale X. Comme le deuxième élément de raccord 3 a une forme globalement cylindrique à base circulaire, les cames excentriques 8 et 9 sont diamétralement opposées.

La partie de retenue 5 est représentée à la figure 1 avec une encoche dans l'épaulement. Cependant, cette encoche est facultative, car une surface plane sur l'épaulement suffirait à obtenir le serrage des organes de serrage 8 et 9 respectivement sur les parties de retenue 5 et 6.

Les parties de retenue 5 et 6 sont ici situées respectivement sur deux côtés du premier élément de raccord 2 qui sont opposés par rapport à la direction longitudinale X. Comme le premier élément de raccord 2 a une forme globalement cylindrique à base circulaire, les parties de retenue 5 et 6 sont diamétralement opposées.

Les cames excentriques 8 et 9 sont disposées dans le deuxième élément de raccord 3, sur une surface intérieure du boîtier 3.3. Chacune des cames excentriques 8 et 9 est déplaçable suivant une rotation et entre :
- une position de serrage (figure 3), dans laquelle chacune des cames excentriques 8 et 9 coopère, par compression, avec une partie de retenue respective 5 ou 6 de façon à fixer le premier élément de raccord 2 dans le deuxième élément de raccord 3, et
- une position de desserrage (figure 2), dans laquelle chacune des cames excentriques 8 et 9 libère une partie de retenue respective 5 ou 6.

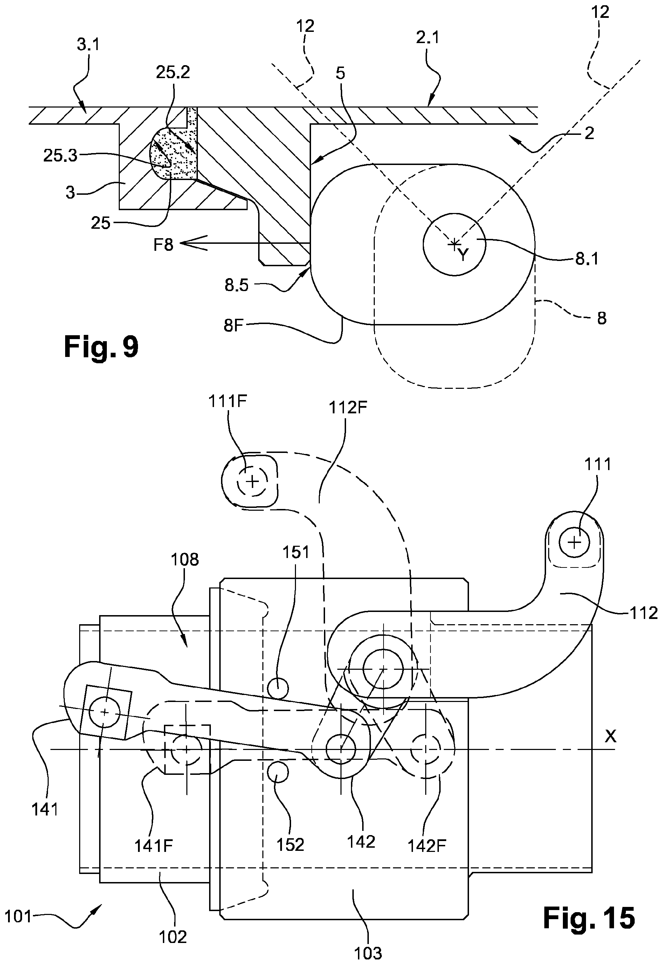

La figure 9 montre la came excentrique 8 en position de desserrage (tirets), et en position de serrage (référence 8F). En position de serrage, une surface de pression de la came excentrique 8F exerce une force F8 sur la partie de retenue 5 suivant la direction longitudinale X. La force F8 est la résultante des efforts de pression.

Le raccord manuel 1 comprend en outre des moyens de manipulation configurés pour déplacer chacune des cames excentriques 8 et 9 entre la position de serrage (figure 3) et la position de desserrage (figure 2). Ce déplacement est réversible, car chacune des cames excentriques 8 et 9 peut se déplacer de la position de serrage (figure 3) à la position de desserrage (figure 2), puis de la position de desserrage (figure 2) à la position de serrage (figure 3).

Les moyens de manipulation sont configurés de sorte que la rotation d'une came excentrique respective 8 ou 9 se fait autour d'une direction de rotation Y et sur une plage angulaire d'environ 90 degrés, comme le montre la comparaison des figures 4 et 6. La direction de rotation Y est ici perpendiculaire à la direction longitudinale X. De plus, la direction de rotation Y est sécante à la section de passage du fluide définie par le deuxième élément de raccord 3. Comme le montrent les figures 1, 2, 3, 5 et 10, la section de passage du fluide est ici une section globalement circulaire définie par la surface interne 3.1. En effet, la surface interne 3.1, comme la surface interne 2.1 a globalement la forme d'un cylindre à base circulaire et d'axe colinéaire à la direction longitudinale X.

Par ailleurs, les moyens de manipulation comprennent ici une poignée 11 formant un organe de préhension adapté pour une préhension par un opérateur. La poignée 11 est liée aux cames excentriques 8 et 9 de sorte qu'un actionnement de la poignée 11 par l'opérateur, ici en pivotement, entraîne en rotation les cames excentriques 8 et 9. En d'autres termes, un seul geste de l'opérateur permet de déplacer simultanément les cames excentriques 8 et 9. Contrairement au raccord manuel de US3860274A ou de US6290267A, le raccord manuel 1 comprend un unique organe de préhension pour déplacer simultanément les organes de serrage 8 et 9.

Dans l'exemple des figures 1 à 8, chacune des cames excentriques 8 et 9 est montée sur un axe respectif 8.1 ou 9.1, qui est lui-même en liaison pivot avec le boîtier 3.3 du deuxième élément de raccord 3. En d'autres termes, les axes respectifs 8.1 ou 9.1 peuvent pivoter par rapport à le deuxième élément de raccord 3, ce qui provoque les rotations des cames excentriques 8 ou 9.

Dans l'exemple des figures 1 à 8, les directions de rotation des cames excentriques 8 et 9 sont colinéaires. En d'autres termes, les cames excentriques 8 et 9 tournent autour d'une direction de rotation Y qui leur est commune. De plus, les cames excentriques 8 et 9 sont ici agencées pour tourner dans le même sens de rotation, par rapport à la direction de rotation Y.

Alternativement, une variante de l'invention peut comprendre des cames excentriques ou autres organes de serrage qui tournent simultanément dans des sens opposés lorsque l'opérateur manœuvre l'organe de préhension.

De plus, les moyens de manipulation comprennent ici deux leviers 12 et 13 qui sont agencés pour pivoter respectivement autour de la direction de rotation Y. Les leviers 12 et 13 sont liés à la poignée 11 de manière fixe, par exemple par vis, rivet ou soudure. Alternativement, les leviers peuvent être liés à la poignée 11 par une liaison pivot, ce qui permet une rotation libre de la poignée 11 lorsque l'opérateur la fait pivoter autour de la direction de rotation Y.

Les leviers 12 et 13 procurent ici à l'opérateur un bras de levier d'environ 100 mm, ce qui limite l'effort manuel à fournir pour serrer le raccord manuel 1. En général, le bras de levier dépend du diamètre interne du raccord manuel ; typiquement, le bras de levier mesure environ deux fois le diamètre interne du raccord manuel ; par exemple, pour un diamètre interne de 100mm, le bras de levier serait d'environ 200 mm.

Chacun des leviers 12 et 13 présente ici un coude, ce qui réduit l'encombrement des leviers 12 et 13 pour un bras de levier donné.

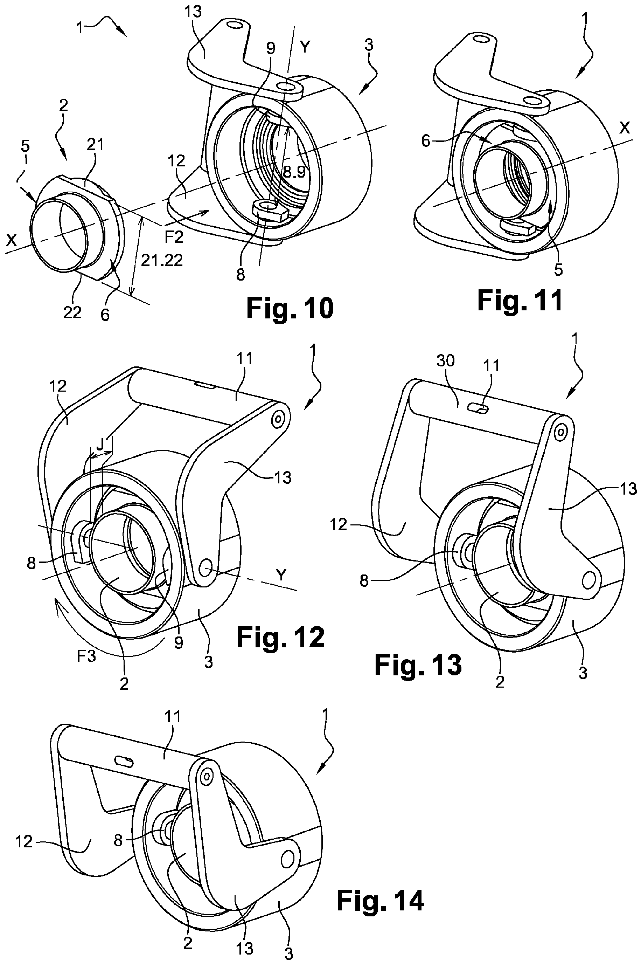

Par ailleurs, comme le montrent les figures 5 et 12, le premier élément de raccord 2 présente sur sa surface externe deux portions d'introduction 21 et 22 qui définissent une dimension transversale 21.22, mesurée orthogonalement à la direction longitudinale X, qui est inférieure à la distance 8.9 séparant les cames excentriques 8 et 9, de sorte que le deuxième élément de raccord 3 peut être déplacé en pivotement autour de la direction longitudinale X entre :
- une position d'introduction (figures 10 et 11), dans laquelle les portions d'introduction 21 et 22 peuvent coulisser entre les cames excentriques 8 et 9 de façon à introduire le premier élément de raccord 2 dans le deuxième élément de raccord 3 en translation suivant la direction longitudinale X (ou le deuxième élément de raccord 3 autour du premier élément de raccord 2), translation symbolisée par la flèche F2 à la figure 12 ; et
- une position de retenue (figures 4 et 12), dans laquelle les parties de retenue sont en butée respectivement contre les cames excentriques 8 et 9 de façon à retenir le premier élément de raccord 2 dans le deuxième élément de raccord 3.

Le pivotement du deuxième élément de raccord 3 entre la position d'introduction (figures 10 et 11) et la position de retenue (figures 4 et 12) est symbolisé par la flèche F3 à la figure 12. La comparaison des figures 11 et 12 permet de visualiser ce pivotement. Ce pivotement s'étend sur environ 90 degrés.

En d'autres termes, lors de ce pivotement du deuxième élément de raccord 3, le premier élément de raccord 2 suit une trajectoire similaire à celle d'une baïonnette lorsque l'opérateur place le deuxième élément de raccord 3 autour du premier élément de raccord 2, puis les place en position de retenue (figure 12).

Le premier élément de raccord 2 est alors retenu, ou accroché, dans le deuxième élément de raccord 3, lorsque les cames excentriques 8 et 9 sont en position de desserrage (figures 2, 6, 7 et 12), ce qui évite, en cas de desserrage inopiné, un éclatement et une fuite majeure du raccord manuel 1 sous l'effet du liquide sous pression. En effet, en position de retenue (figure 12), il n'y a qu'un petit jeu entre le premier élément de raccord 2 et le deuxième élément de raccord 3, donc un petit débit de fuite en cas d'incident. Plus précisément, ce jeu, symbolisé par la cote J à la figure 4 ou 12, s'étend entre chacune des cames excentriques 8 et 9 et la collerette du premier élément de raccord 2.

Selon une variante de l'invention, chaque partie de retenue est solidaire du premier élément de raccord, par exemple de manière monobloc avec le premier élément de raccord. Ainsi, les parties de retenue peuvent supporter de grands efforts de serrage et leur fabrication peut être simple lorsqu'elles sont venues de matière avec le premier élément de raccord.

Le premier élément de raccord 2 présente ici une collerette formant la portion proximale 7 du premier élément de raccord 2. Le contour de cette collerette définit les parties de retenue 5 et 6. Les portions d'introduction 21 et 22 sont ménagées sur cette collerette. Dans l'exemple des figures 1 à 14, les portions d'introduction 21 et 22 sont formées par des méplats tronqués dans la collerette.

Ainsi, le pourtour d'une telle collerette définit en fait une pluralité de parties de retenue, ce qui permet à l'opérateur de placer aisément les parties de retenue en contact avec les cames excentriques 8 et 9 sur une grande plage angulaire, environ 90 degrés, autour de la direction longitudinale X.

De plus, le raccord manuel 1 comprend un joint d'étanchéité 25 qui est élastiquement déformable. Le joint d'étanchéité 25 est ici composé d'un éthylène-propylène-diène monomère (EPDM). Le joint d'étanchéité 25 est ici logé partiellement dans une gorge du deuxième élément de raccord 3. Comme le montre la figure 9, le joint d'étanchéité 25 est agencé de façon à réaliser un raccordement étanche entre une première portée de joint 25.2 définie par le premier élément de raccord 2 et une deuxième portée de joint 25.3 définie par le deuxième élément de raccord 3.

De plus, le joint d'étanchéité 25, les cames excentriques 8 et 9 et les première 25.2 et deuxième 25.3 portées de joints sont configurés de sorte que le joint d'étanchéité 25 affleure les surfaces internes 2.1 et 3.1, c'est-à-dire les surfaces mouillées, du premier élément de raccord 2 et du deuxième élément de raccord 3 lorsque chacune des cames excentriques 8 et 9 est en position de serrage (figures 3 et 14).

En outre, le raccord manuel 1 comprend un détecteur actif non représenté et un élément passif 30 qui forment un dispositif de détection configuré pour générer un signal lorsque chacune des cames excentriques 8 et 9 est en position de serrage (figures 3 et 14). Dans l'exemple des figures 1 à 14, l'élément passif 30 comprend une étiquette de radio-identification (usuellement désignée par l'acronyme anglais « RFID » signifiant « *Radio-frequency identification* ») et le détecteur actif comprend une antenne de radio-identification et une source d'énergie électriquement reliée à l'antenne de radio-identification.

L'élément passif 30 est ici abrité dans un logement ménagé dans la poignée 11. D'autre part, le détecteur actif est solidaire du premier élément de raccord 2. Par exemple, le détecteur actif peut être fixé directement sur le premier élément de raccord 2, ou sur le conduit auquel est connecté le premier élément de raccord 2, ou encore sur un tableau de pontage sur lequel est monté le premier élément de raccord 2.

Le détecteur actif émet régulièrement des requêtes et il reçoit une réponse de l'élément passif 30, lorsque l'élément passif 30 est à distance suffisante du détecteur actif , c'est-à-dire lorsque chacune des cames excentriques 8 et 9 est en position de serrage (figures 3 et 14).

Comme le montre la figure 2 ou 8, le raccord manuel 1 comprend en outre un dispositif de verrouillage 35 qui est agencé pour bloquer la rotation d'au moins une came excentrique 8 ou 9, de façon à éviter un desserrage inopiné. Dans l'exemple des figures 1 à 14, le dispositif de verrouillage 35 comprend une goupille 36 et un organe élastique de rappel formé par un ressort 37 de forme hélicoïdale et travaillant en compression.

La goupille 36 est manuellement déplaçable entre :
- une position de verrouillage (figure 8), dans laquelle la goupille 36 pénètre partiellement dans une cavité 39.1 ménagée dans l'axe 9.1 solidaire en rotation de la came excentrique 9, et
- une position de déverrouillage (non représentée), dans laquelle la goupille 36 est dégagée de la cavité 39.1, le ressort 37 étant agencé pour rappeler la goupille 36 en position de verrouillage (figure 8).

En utilisation, lorsque le liquide ne s'écoule pas dans les conduits, un opérateur raccorde les conduits amont et aval en exécutant successivement les étapes illustrées aux figures 10 à 14 :
Tout d'abord, le premier élément de raccord 2 est hors du deuxième élément de raccord 3 (figure 10).

Puis, l'opérateur introduit le premier élément de raccord 2 dans le deuxième élément de raccord 3 (figure 11), par exemple en amenant le deuxième élément de raccord 3 autour du premier élément de raccord 2 (translation selon flèche F2 à la figure 12).

Ensuite, l'opérateur tourne de 90 degrés le deuxième élément de raccord 3 par rapport à le premier élément de raccord 2 et autour de la direction longitudinale X (figure 12, flèche F3), ce qui amène le raccord manuel 1 en configuration de retenue, les cames excentriques 8 et 9 étant en position de desserrage.

Puis, l'opérateur saisit la poignée 11 et la fait pivoter d'environ 90 degrés en direction du premier élément de raccord 2 (figure 14), ce qui comprime les cames excentriques 8 et 9 respectivement contre les parties de retenue 5 et 6 (position de serrage).

Lors de ce pivotement, le raccordement devient étanche dans une configuration intermédiaire (figure 13). Après ce raccordement étanche, le liquide peut s'écouler dans les conduits et à travers le raccord manuel 1.

La figure 15 illustre un raccord manuel 101 conforme à un deuxième mode de réalisation de l'invention. Dans la mesure où le raccord manuel 101 est similaire au raccord manuel 1, la description du raccord manuel 1 donnée ci-avant en relation avec les figures 1 à 14 peut être transposée au raccord manuel 101, à l'exception notable des différences énoncées ci-après.

Un élément du raccord manuel 101 identique ou correspondant, par sa structure ou par sa fonction, à un élément du raccord manuel 1 porte la même référence numérique augmentée de 100. On définit ainsi un premier élément de raccord 102, un deuxième élément de raccord 103, une poignée 111, un levier 112, et deux organes de serrage, dont l'un est visible avec la référence 108. On notera que la figure 15 illustre les organes de serrage 108 et équivalent à la fois en position de serrage (poignée 111 à droite) et en position de desserrage (poignée 111 à gauche).

Le raccord manuel 101 diffère du raccord manuel 1, car chacun des organe de serrage 108 et équivalent comprend deux bielles, à savoir une bielle de fermeture 141 et une bielle de relais 142. La bielle de fermeture 141 et la bielle de relais 142 sont liées à la poignée 111 et elles sont agencées de sorte qu'une rotation de la poignée 111F induise une rotation démultipliée de chacun des organes de serrage 108 et équivalent.

La référence d'un composant illustré à la figure 15 en position de serrage porte la lettre suffixe « F » (111F, 141F, 142F), à savoir la poignée 111F en position de serrage, la bielle de fermeture 141F en position de serrage, la bielle de relais 142F.

La bielle de fermeture 141 a pour fonction de comprimer des parties de retenue non représentées du premier élément de raccord 102. La bielle de relais 142 a pour fonction de lier mécaniquement la bielle de fermeture 141 à la poignée 111.

De plus, chacun des organes de serrage 108 et équivalent comprend deux butées 151 et 152 et équivalents pour limiter les mouvements vers le haut et vers le bas de la bielle de fermeture 141.

## Revendications

1. Raccord manuel (1 ; 101), apte à raccorder deux conduits destinés à conduire du fluide, le raccord manuel (1 ; 101) comprenant :
- un premier élément de raccord (2 ; 102), comportant au moins deux parties de retenue (5, 6) ;
- un deuxième élément de raccord (3 ; 103), adapté pour recevoir le premier élément de raccord (2 ; 102) suivant une direction longitudinale (X), le deuxième élément de raccord (3 ; 103) comportant au moins deux organes de serrage (8, 9 ; 108, 109) disposés dans le deuxième élément de raccord (3 ; 103), chaque organe de serrage (8, 9) étant déplaçable au moins suivant une rotation et entre une position de serrage, dans laquelle chaque organe de serrage (8, 9) coopère avec une partie de retenue respective (5, 6) de façon à fixer le premier élément de raccord (2 ; 102) dans le deuxième élément de raccord (3 ; 103), et une position dite de desserrage, dans laquelle chaque organe de serrage (8, 9) libère une partie de retenue respective (5, 6) ; et
- des moyens de manipulation configurés pour déplacer chaque organe de serrage (8, 9) entre la position de serrage et la position de desserrage ; les moyens de manipulation sont configurés de sorte que la rotation d'un organe de serrage respectif (8, 9) se fait autour d'une direction de rotation (Y) qui est orthogonale à la direction longitudinale (X) ; et les moyens de manipulation comprennent un organe de préhension (11; 111) adapté pour une préhension par un opérateur, par exemple une poignée, l'organe de préhension (11; 111) étant lié à chaque organe de serrage (8, 9) de sorte qu'un actionnement de l'organe de préhension (11; 111) par l'opérateur, par exemple en pivotement, entraîne en rotation les deux organes de serrage (8, 9),
le premier élément de raccord (2 ; 102) présentant sur sa surface externe au moins deux portions d'introduction (21, 22) définissant une dimension transversale (21.22), mesurée orthogonalement à la direction longitudinale (X), qui est inférieure à la distance (8.9) séparant les deux organes de serrage (8, 9), de sorte que le deuxième élément de raccord (3 ; 103) peut être déplacé en pivotement autour de la direction longitudinale (X) entre :
- une position d'introduction, dans laquelle les portions d'introduction (21, 22) peuvent coulisser entre les organes de serrage (8, 9) de façon à introduire le premier élément de raccord (2 ; 102) dans le deuxième élément de raccord (3 ; 103) en translation suivant la direction longitudinale (X) ; et
- une position de retenue, dans laquelle les parties de retenue (5, 6) sont en butée respectivement contre les organes de serrage (8, 9) de façon à retenir le premier élément de raccord (2 ; 102) dans le deuxième élément de raccord (3 ; 103)
- **caractérisé en ce qu'**il comprend en outre un dispositif de verrouillage (35) agencé pour être apte à bloquer la rotation d'au moins un organe de serrage (8, 9), ce dispositif de verrouillage (35) comprenant une goupille et un organe élastique de rappel, la goupille étant manuellement déplaçable entre une position de verrouillage, dans laquelle la goupille pénètre partiellement dans une cavité ménagée dans un axe solidaire en rotation de l'un des organes de serrage, et une position de déverrouillage, dans laquelle la goupille est dégagée de la cavité, l'organe élastique de rappel étant agencé pour rappeler la goupille en position de verrouillage.

2. Raccord manuel (1 ; 101) selon la revendication 1, dans lequel chaque partie de retenue (5, 6) est formée par un épaulement respectif disposé en saillie externe sur le premier élément de raccord (2 ; 102).

3. Raccord manuel (1 ; 101) selon la revendication 2, dans lequel le premier élément de raccord (2 ; 102) présente une collerette, de préférence située sur une portion proximale (7) du premier élément de raccord (2 ; 102), le contour de la collerette définissant les parties de retenue (5, 6), les portions d'introduction (21, 22) étant ménagées dans la collerette.

4. Raccord manuel (1) selon l'une des revendications précédentes, dans lequel chaque organe de serrage (8, 9) comprend une came excentrique à profil extérieur curviligne, de préférence convexe.

5. Raccord manuel (1 ; 101) selon l'une des revendications précédentes, dans lequel les directions de rotation (Y) des deux organes de serrage (8, 9) sont parallèles, de préférence colinéaires, et dans lequel les organes de serrage (8, 9) sont agencés pour tourner dans le même sens de rotation.

6. Raccord manuel (1 ; 101) selon l'une des revendications précédentes, dans lequel le premier élément de raccord (2 ; 102) et le deuxième élément de raccord (3 ; 103) définissent, en position de serrage, un canal ayant globalement la forme d'un cylindre, de préférence à base circulaire, la direction longitudinale (X) étant colinéaire à l'axe dudit cylindre.

7. Raccord manuel (1 ; 101) selon l'une des revendications précédentes, dans lequel les moyens de manipulation comprennent deux leviers (12, 13) agencés pour pivoter respectivement autour des directions de rotation, les leviers (12, 13) étant liés, de préférence de manière fixe, à l'organe de préhension (11; 111).

8. Raccord manuel (1) selon l'une des revendications précédentes, comprenant en outre un joint d'étanchéité (25) élastiquement déformable, agencé de façon à réaliser un raccordement étanche entre une première portée de joint (25.2) définie par le premier élément de raccord (2) et une deuxième portée de joint (25.3) définie par le deuxième élément de raccord (3), le joint d'étanchéité, les organes de serrage (8, 9) et les première (25.2) et deuxième (25.3) portées de joints étant configurés de sorte que le joint d'étanchéité (25) affleure les surfaces mouillées (2.1, 3.1) du premier élément de raccord (2 ; 102) et du deuxième élément de raccord (3 ; 103) lorsque chaque organe de serrage (8, 9) est en position de serrage.

9. Raccord manuel (1) selon l'une des revendications précédentes, comprenant en outre au moins un dispositif de détection comprenant un détecteur actif, de préférence sélectionné dans le groupe constitué d'une caméra, d'un capteur magnéto-inductif, d'un capteur inductif et d'une antenne de radio-identification, le dispositif de détection comprenant en outre un élément passif, par exemple une étiquette de radio-identification, le détecteur actif étant configuré pour générer un signal lorsque chaque organe de serrage (8, 9) est en position de serrage.

10. Rapport manuel (1) selon la revendication 9, dans lequel le détecteur actif est solidaire du premier élément de raccord (2) et dans lequel l'élément passif est porté par le deuxième élément de raccord (3).

## Patentansprüche

1. Manuelle Verbindung (1; 101), die imstande ist, zwei Leitungen, die zum Leiten eines Fluids bestimmt sind, zu verbinden, wobei die manuelle Verbindung (1; 101) umfasst:
- ein erstes Verbindungselement (2; 102), das mindestens zwei Halteabschnitte (5, 6) aufweist;
- ein zweites Verbindungselement (3; 103), das zur Aufnahme des ersten Verbindungselements (2; 102) gemäß einer Längsrichtung (X) geeignet ist, wobei das zweite Verbindungselement (3; 103) mindestens zwei Spannorgane (8, 9; 108, 109) aufweist, die in dem zweiten Verbindungselement (3; 103) angeordnet sind, wobei jedes Spannorgan (8, 9) mindestens gemäß einer Rotation und zwischen einer Spannposition, in welcher jedes Spannorgan (8, 9) mit einem jeweiligen Halteabschnitt (5, 6) derart zusammenwirkt, dass das erste Verbindungselement (2; 102) im zweiten Verbindungselement (3; 103) befestigt ist, und einer Löseposition, in welcher jedes Spannorgan (8, 9) einen jeweiligen Halteabschnitt (5, 6) freigibt, bewegbar ist; und
- Handhabungsmittel, die konfiguriert sind, um jedes Spannorgan (8, 9) zwischen der Spannposition und der Löseposition zu bewegen; wobei die Handhabungsmittel derart konfiguriert sind, dass die Rotation eines jeweiligen Spannorgans (8, 9) um eine Rotationsrichtung (Y) erfolgt, die orthogonal zur Längsrichtung (X) ist; und die Handhabungsmittel ein Greiforgan (11; 111) umfassen, das für ein Ergreifen durch einen Bediener geeignet ist, beispielsweise einen Griff, wobei das Greiforgan (11; 111) mit jedem Spannorgan (8, 9) derart verbunden ist, dass eine Betätigung des Greiforgans (11; 111) durch den Bediener, beispielsweise schwenkend, die zwei Spannorgane (8, 9) rotierend antreibt, wobei das erste Verbindungselement (2; 102) auf seiner Außenfläche mindestens zwei Einsetzabschnitte (21, 22) aufweist, die eine transversale Dimension (21.22) definieren, gemessen orthogonal zur Längsrichtung (X), die kleiner als der Abstand (8.9) ist, der die zwei Spannorgane (8, 9) trennt, so dass das zweite Verbindungselement (3; 103) schwenkend um die Längsrichtung (X) bewegbar ist zwischen:
- einer Einsetzposition, in welcher die Einsetzabschnitte (21, 22) zwischen den Spannorganen (8, 9) derart gleiten können, dass das erste Verbindungselement (2; 102) in das zweite Verbindungselement (3; 103) translatorisch gemäß der Längsrichtung (X) eingesetzt wird; und
- einer Halteposition, in welcher die Halteabschnitte (5, 6) jeweils an den Spannorganen (8, 9) in Anschlag sind, so dass das erste Verbindungselement (2; 102) im zweiten Verbindungselement (3; 103) gehalten wird,
**dadurch gekennzeichnet, dass** sie ferner eine Verriegelungsvorrichtung (35) umfasst, die eingerichtet ist, um imstande zu sein, die Rotation mindestens eines Spannorgans (8, 9) zu blockieren, wobei diese Verriegelungsvorrichtung (35) einen Stift und ein elastisches Rückstellorgan umfasst, wobei der Stift zwischen einer Verriegelungsposition, in welcher der Stift teilweise in einen Hohlraum eindringt, der in einer Achse ausgebildet ist, die mit einem der Spannorgane rotatorisch fest verbunden ist, und einer Entriegelungsposition, in welcher der Stift aus dem Hohlraum gelöst ist, manuell bewegbar ist, wobei das elastische Rückstellorgan eingerichtet ist, um den Stift in Verriegelungsposition zurückzustellen.

2. Manuelle Verbindung (1; 101) nach Anspruch 1, wobei jeder Halteabschnitt (5, 6) von einem jeweiligen Absatz gebildet ist, der außen hervorstehend auf dem ersten Verbindungselement (2; 102) angeordnet ist.

3. Manuelle Verbindung (1; 101) nach Anspruch 2, wobei das erste Verbindungselement (2; 102) einen Kragen aufweist, der sich vorzugsweise auf einem proximalen Abschnitt (7) des ersten Verbindungselements (2; 102) befindet, wobei die Kontur des Kragens die Halteabschnitte (5, 6) definiert, wobei die Einsetzabschnitte (21, 22) in dem Kragen ausgebildet sind.

4. Manuelle Verbindung (1) nach einem der vorangehenden Ansprüche, wobei jedes Spannorgan (8, 9) eine exzentrierte Kurvenscheibe mit gekrümmtem, vorzugsweise konvexem Außenprofil umfasst.

5. Manuelle Verbindung (1; 101) nach einem der vorangehenden Ansprüche, wobei die Rotationsrichtungen (Y) der zwei Spannorgane (8, 9) parallel, vorzugsweise kolinear sind, und wobei die Spannorgane (8, 9) eingerichtet sind, um in derselben Rotationsrichtung zu drehen.

6. Manuelle Verbindung (1; 101) nach einem der vorangehenden Ansprüche, wobei das erste Verbindungselement (2; 102) und das zweite Verbindungselement (3; 103) in Spannposition einen Kanal definieren, der allgemein die Form eines Zylinders hat, vorzugsweise mit kreisförmiger Basis, wobei die Längsrichtung (X) kolinear zur Achse des Zylinders ist.

7. Manuelle Verbindung (1; 101) nach einem der vorangehenden Ansprüche, wobei die Handhabungsmittel zwei Hebel (12, 13) umfassen, die eingerichtet sind, um jeweils um Rotationsrichtungen zu drehen, wobei die Hebel (12, 13) vorzugsweise fest mit dem Greiforgan (11; 111) verbunden sind.

8. Manuelle Verbindung (1) nach einem der vorangehenden Ansprüche, umfassend ferner eine elastisch verformbare Dichtung (25), die derart eingerichtet ist, dass eine dichte Verbindung zwischen einer ersten Dichtleiste (25.2), definiert durch das erste Verbindungselement (2), und einer zweiten Dichtleiste (25.3), definiert durch das zweite Verbindungselement (3), hergestellt wird, wobei die Dichtung, die Spannorgane (8, 9) und die erste (25.2) und zweite (25.3) Dichtleiste derart konfiguriert sind, dass die Dichtung (25) mit den feuchten Flächen (2.1, 3.1) des ersten Verbindungselements (2; 102) und des zweiten Verbindungselements (3; 103) bündig ist, wenn jedes Spannorgan (8, 9) in Spannposition ist.

9. Manuelle Verbindung (1) nach einem der vorangehenden Ansprüche, umfassend ferner mindestens eine Detektionsvorrichtung, umfassend einen aktiven Detektor, der vorzugsweise aus der Gruppe ausgewählt ist, die von einer Kamera, einem Magnetinduktivsensor, einem Induktivsensor und einer Funkidentifikationsantenne gebildet ist, wobei die Detektionsvorrichtung ferner ein passives Element umfasst, beispielsweise ein Funkidentifikationsetikett, wobei der aktive Detektor konfiguriert ist, um ein Signal zu erzeugen, wenn jedes Spannorgan (8, 9) in Spannposition ist.

10. Manuelle Verbindung (1) nach Anspruch 9, wobei der aktive Detektor mit dem ersten Verbindungselement (2) fest verbunden ist und wobei das passive Element von dem zweiten Verbindungselement (3) getragen wird.

## Claims

1. A manual connector (1; 101), adapted to connect two conduits intended to conduct a fluid, the manual connector (1; 101) comprising:
- a first connector element (2; 102), including at least two retaining portions (5, 6);
- a second connector element (3; 103), adapted to receive the first connector element (2; 102) in a longitudinal direction (X), the second connector element (3; 103) including at least two clamping members (8, 9; 108, 109) disposed in the second connector element (3; 103), each clamping member (8, 9) being displaceable at least in rotation and between a clamping position, in which each clamping member (8,9) cooperates with a respective retaining portion (5, 6) so as to fasten the first connector element (2; 102) in the second connector element (3; 103), and a position called unclamping position, in which each clamping member (8, 9) releases a respective retaining portion (5, 6); and
- handling means configured to displace each clamping member (8, 9) between the clamping position and the unclamping position; the handling means are configured so that the rotation of a respective clamping member (8, 9) is done about a direction of rotation (Y) which is orthogonal to the longitudinal direction (X); and the handling means comprise a gripping member (11; 111) adapted for a gripping by an operator, for example a handle, the gripping member (11; 111) being linked to each clamping member (8, 9) so that an actuation of the gripping member (11; 111) by the operator, for example in pivoting, drives in rotation the two clamping members (8, 9),
the first connector element (2; 102) having on its outer surface at least two insertion portions (21, 22) defining a transverse dimension (21.22), measured orthogonally to the longitudinal direction (X), which is smaller than the distance (8.9) separating the two clamping members (8, 9), so that the second connector element (3; 103) can be pivotally displaced about the longitudinal direction (X) between:
- an insertion position, in which the insertion portions (21, 22) can slide between the clamping members (8, 9) so as to insert the first connector element (2; 102) into the second connector element (3; 103) in translation in the longitudinal direction (X); and
- a retaining position, in which the retaining portions (5, 6) abut respectively against the clamping members (8, 9) so as to retain the first connector element (2; 102) in the second connector element (3; 103)
- **characterized in that** it further comprises a locking device (35) arranged to be adapted to block the rotation of at least one clamping member (8, 9), this locking device (35) comprising a pin and an elastic biasing member, the pin being manually displaceable between a locking position, in which the pin partially penetrates into a cavity formed in an axis secured in rotation with one of the clamping members, and an unlocking position, in which the pin is disengaged from the cavity, the elastic biasing member being arranged to bias the pin in the locking position.

2. The manual connector (1; 101) according to claim 1, wherein each retaining portion (5, 6) is formed by a respective shoulder disposed outwardly protruding on the first connector element (2; 102).

3. The manual connector (1; 101) according to claim 2, wherein the first connector element (2; 102) has a flange, preferably located on a proximal portion (7) of the first connector element (2; 102), the contour of the flange defining the retaining portions (5,6), the insertion portions (21, 22) being formed in the flange.

4. The manual connector (1) according to any of the preceding claims, wherein each clamping member (8, 9) comprises an eccentric cam with a curvilinear, preferably convex, external profile.

5. The manual connector (1; 101) according to any of the preceding claims, wherein the directions of rotation (Y) of the two clamping members (8, 9) are parallel, preferably collinear, and wherein the clamping members (8, 9) are arranged so as to rotate in the same direction of rotation.

6. The manual connector (1; 101) according to any of the preceding claims, wherein the first connector element (2; 102) and the second connector element (3; 103) define, in the clamping position, a channel having generally the shape of a cylinder, preferably with a circular base, the longitudinal direction (X) being collinear with the axis of said cylinder.

7. The manual connector (1; 101) according to any of the preceding claims, wherein the handling means comprise two levers (12, 13) arranged so as to pivot respectively about the directions of rotation, the levers (12, 13) being linked, preferably fixedly, to the gripping member (11; 111).

8. The manual connector (1) according to any of the preceding claims, further comprising an elastically deformable sealing gasket (25), arranged so as to achieve a sealed connection between a first gasket bearing (25.2) defined by the first connector element (2) and a second gasket bearing (25.3) defined by the second connector element (3), the sealing gasket, the clamping members (8, 9) and the first (25.2) and second (25.3) gasket bearings being configured so that the sealing gasket (25) is flush with the wet surfaces (2.1, 3.1) of the first connector element (2; 102) and the second connector element (3; 103) when each clamping member (8, 9) is in the clamping position.

9. The manual connector (1) according to any of the preceding claims, further comprising at least one detection device comprising an active detector, preferably selected from the group constituted by a camera, a magneto-inductive sensor, an inductive sensor and a radio-identification antenna, the detection device further comprising a passive element, for example a radio-identification tag, the active detector being configured to generate a signal when each clamping member (8 , 9) is in the clamping position.

10. The manual connector (1) according to claim 9, wherein the active detector is secured to the first connector element (2) and wherein the passive element is carried by the second connector element (3).
